# EUROPEAN PATENT SPECIFICATION

(11) **EP 4 324 318 B1**
(45) Date of publication and mention of the grant of the patent: **07.10.2026**
(21) Application number: 23189276.1
(22) Date of filing: 02.08.2023
(51) Int. Cl.: A01C 23/00

(54) **AGRICULTURAL DEVICE FOR SPREADING A PUMPABLE MEDIUM OVER AGRICULTURAL LAND, AND ITS RESPECTIVE METHOD**
LANDWIRTSCHAFTLICHE VORRICHTUNG ZUM AUSBRINGEN EINES PUMPFÄHIGEN MEDIUMS ÜBER LANDWIRTSCHAFTLICHE FLÄCHE UND ENTSPRECHENDES VERFAHREN
DISPOSITIF AGRICOLE POUR ÉPANDRE UN MILIEU POMPABLE SUR UN TERRAIN AGRICOLE ET SON PROCÉDÉ RESPECTIF

(30) Priority: 16.08.2022 DE 102022120702
(43) Date of publication of application: 21.02.2024
(73) Proprietor: Bomech B.V., 7665 SH Albergen (NL)
(72) Inventor: SCHURINK, Gerard Johannes, 7665 SH Albergen (NL); HOEK, Johannes Bernardus Maria, 7665 SH Albergen (NL)
(74) Representative: Patentwerk B.V.

(56) References cited:
- EP-A1- 3 939 426
- DE-U1- 20 004 150
- DE-U1- 29 612 113

## Description

The invention relates to an agricultural device for spreading a pumpable medium over agricultural land. The invention also relates to a method for adjusting the working width of an agricultural device movable with a vehicle for spreading a pumpable medium according to the invention.

Agricultural devices of this kind are generally known, for example for spreading liquid manure over (agricultural)land, as a spraying device for the spraying of liquid plant protection agents or as a sowing device for the seeding of ground. In order to allow activities to take place as effectively as possible, agricultural devices of this kind are provided with one or more working arms that may be oriented so that they extend in their working position transversely to the direction of travel of a carrying vehicle in order to be able to work a strip as wide as possible and/or a specifically adjustable working strip of (farm)land in a single operation. So as also to be able to move the agricultural device over the (public) highway, the processing arm(s) is/are configured so that they can be folded-in to a maximum width that roughly matches the width of the carrying vehicle. In vehicles of the prior art the arms generally extend on either side of the carrying vehicle. The vehicle is usually provided with a tank, wherein the arms extend on either side of the tank, but it is also possible that the pumpable medium is delivered from a separate buffer of the medium in the form of an external mobile or stationary supply system located at a short distance from the carrying vehicle. The spreader arms should be able to be folded-in compactly but it is desirable that in the folded-out working state they have a working width as large as possible and/or a specifically adjustable working strip. It must be borne in mind that in the folded-out working state the arms may be heavily loaded by among other things the abrupt movement of the carrying vehicle, the presence of pumpable medium in the pipelines (so that the weight to be carried increases) and local height differences in the ground which ideally should be able to be followed by the spreader arms. A description of a device of this kind is given for example in German Gebrauchsmuster [utility model] 06008173.9 of the present applicant. Further devices according to the prior art are shown in DE20004150, EP3939426, and DE29612113.

Many of these spreader arms are provided with a mechanism in order to fold the spreader arm or push it in, so as to limit the length for transport. In so doing it may be achieved that the arms in the transport position are relatively short, and do not extend too far relative to for example the tank or the vehicle to which it is coupled. By folding out and/or pushing the spreader arm to a working position, wherein the spreader arm generally extends transversely relative to the direction of travel, a wider working width can be achieved. This has the advantage that a wider strip of land can be worked at the same time. However, in the folded-out state, the folded-out part of the spreader arm must then also be configured to be able to work the agricultural land. For example, in the case of medium outlets for the purpose of spreading manure, the folded-out part of the spreader arm must also be provided with medium outlets. Generally, in the case of medium outlets, this is achieved by folding-out a frame with medium outlets around an axis that extends parallel to the spreader arm. The folded-out part may thus be provided with medium outlets in one go. There are also alternatives wherein the spreader arm can be pushed out to adjust the working width. In such cases generally both parts are provided with medium outlets.

Such constructions often have the drawback that adjusting a flexible working width is not possible or is time-consuming. In particular because it has to be selected whether to bring the medium outlets of the folded-out part of the spreader arm completely or not completely in readiness. Readying the medium outlets of the folded-out spreader arm part also often requires an extra operation, which may possibly be forgotten by the user. Otherwise, the above example of medium outlets is not to be understood as limiting. Although medium outlets are mentioned in the above situation, the present invention also relates to alternative operating components.

A first aim of the present invention is to provide a more flexible working width adjustment. A second aim of the present invention is to provide a simpler working width adjustment. Another aim is to provide a relatively stable construction.

The present invention therefore provides an agricultural device for spreading a pumpable medium over agricultural land according to the appended claims.

According to the present disclosure, the pumpable medium is to be construed in broad terms. For example, a liquid substance may be understood hereunder, for example such as a liquid manure or pesticide, however it is also conceivable that a pumpable medium refers to a gas or air, possibly in combination with an additive, for example such as a seed, or seeds. Optionally it may be a semi-liquid substance, for example a manure with harder components therein. In principle, the present disclosure is suitable for the types of medium that are pumpable by a pump that is suitable for that. Thus, for example, in the specific case of air with seeds, a blower may serve as the pump, wherein the air and the seeds are to be regarded as the pumpable medium.

An embodiment is configured for adjusting a working width more simply by means of the at least one activator. That is, where according to the prior art it is often necessary to fold out or push the spreader arm portions relative to each other completely, it is possible according to an embodiment to do this dynamically and selectively. Thus, the movable spreader arm portion may be moved only partly relative to the substantially fixed spreader arm portion. The at least one activator in addition regulates the getting ready or the closing of medium outlets. Because the spreader arm portions are adjustable in the longitudinal direction relative to each other, it is possible to set a selective preferred width. If the spreader arm portions substantially have an identical length, the spreader arm can assume a working width that is substantially identical to twice the width of one spreader arm portion. Because the activator according to the present invention is configured for regulating the medium outlets as a function of the position or direction of motion, the desired working width can be assumed. Preferably a mutual distance between released medium outlets remains substantially constant over substantially the full length of the spreader arm. It is moreover conceivable that instead of two, several spreader arm portions are used, wherein the working width can be increased further. In that case it is still possible, by means of the at least one activator, to regulate at least one of the medium outlets of at least one spreader arm portion. Regulating at least one medium outlet as a function of a mutual position can be explained as the carrying out of a regulating operation at a specific mutual position. This mutual position may for example be reached if a spreader arm portion is moved more than a predetermined distance relative to another spreader arm portion. However, this may for example also be if the farthest point of the spreader arm extends farther than a predetermined distance relative to the vehicle. As a function of a mutual direction of motion is to be understood as for example the regulating of at least one of the medium outlets as a function of the sliding-in or sliding-out of the spreader arm portions. For example if an outermost spreader arm portion is pushed inwards, it may be desirable to fold up at least one of the medium outlets of that part. A combination of the aforementioned regulating is also conceivable.

By configuring the regulating as a function of a mutual direction of motion and/or position it is possible to achieve a more stable construction wherein fewer driven parts are required. Now, with the mutual sliding in or out of the spreader arm portions these directions of motion and/or positions are already reached. If use can be made, by means of at least one activator, of this/these direction(s) of motion or position(s), for example an external or additional drive for regulation may be superfluous. This may contribute to providing a simpler construction. In addition it is then easier to set a working width.

Preferably the regulation of the at least one medium outlet comprises at least folding up or folding out around a rotation axis and/or closing or releasing of the at least one medium outlet. During folding up or folding out, the rotation axis is preferably substantially parallel to at least one of the spreader arm portions. It is conceivable that folding up or folding out takes place within a rotation range between 0 degrees and 270 degrees, preferably between 0 degrees and 225 degrees, more preferably between 0 degrees and 180 degrees. Then 0 degrees may be understood as being that one of the medium outlets is directed towards the ground, and is for example at right angles thereto. For the aforementioned degrees, it may be understood that there is a deviation of about plus or minus 5 or 10 degrees. Although it is conceivable that only one activator is included that is configured to control both folding up or folding out and/or closing or release, this may also be by means of two or more separate activators. Then one activator could be configured for folding up or folding out and one activator for closing or release. It is conceivable that both activators simultaneously or successively fold up or fold out and close or release the same medium outlet. Therefore it is possible that the activator is configured for simultaneously folding up or folding out and closing or releasing at least one of the medium outlets. It is not necessary that folding up is paired with closing and folding out with the release. It may be desirable that one of the medium outlets is folded out but is not released and thus should be closed. This situation may for example be desirable if one of the medium outlets is passing over ground that already comprises sufficient manure. In that way, in addition medium may be discharged more flexibly. Separately from the simultaneous folding up or folding out and closing or release, it is conceivable that the activator is configured for simultaneously folding up or folding out and/or closing or releasing several medium outlets. The simultaneous folding up or folding out and/or closing or releasing several medium outlets is possible for example if a path of motion of the medium outlets is sufficiently long for two medium outlets to proceed on the path simultaneously, both of which are being folded up or folded out. It is also possible to achieve this by for example placing a second activator, preferably at least partly parallel to the first activator, wherein both activators would be able to fold up or fold out and/or close or release a medium outlet simultaneously.

Preferably the activator is configured for regulating a single medium outlet, preferably individually regulating a single medium outlet, dependent on the mutual position and/or direction of motion of the at least two spreader arm portions. In that way it may be achieved that a working width of the agricultural device can be adjusted substantially continuously. Because the activator is configured for regulating a single medium outlet, it is not necessary to slide out the spreader arm portions completely in order to make a connection. It is conceivable that the activator is configured to regulate several medium outlets, for example two, or three or four medium outlets, simultaneously. However, some other number is also conceivable and the invention is not limited to the aforementioned numbers. Preferably wherein the aforementioned several medium outlets are in various stages of the folding up and/or folding out or the closing and/or release.

According to a variant embodiment of the present invention, the activator is configured for regulating adjacent medium outlets successively and/or subsequently dependent on the mutual position and/or direction of motion of the at least two spreader arm portions. It is then conceivable that dependent on the mutual position and/or direction of motion of the at least two spreader arm portions, several, for example two, three or four medium outlets are regulated simultaneously. It is also conceivable that the activator is configured for regulating one or more sections with medium outlets, dependent on the mutual position and/or direction of motion of the at least two spreader arm portions. Preferably a width of at least one section is between 0.5 m and 2.5 m, in particular 1.5 m. It is conceivable that on at least one section, between two and ten medium outlets, preferably six medium outlets are located. However, intermediate numbers are also possible, and are not excluded. Preferably said several medium outlets and/or sections are in various stages of folding up and/or folding out or closing and/or release. It is also conceivable that the medium outlets are regulated successively in pairs. For this purpose, preferably several medium outlets are provided on one mounting frame, wherein the several medium outlets on the one mounting frame are regulated together.

According to a variant embodiment of the present invention, the activator is configured for interacting with at least one part of at least one of the medium outlets, preferably a frame, such as a mounting frame, of at least one of the medium outlets. Preferably one medium outlet is provided on and/or connected to a mounting frame. The mounting frame may be an integral component of the at least one medium outlet, but may also be an external frame of the at least one medium outlet. Preferably the part of the medium outlet or mounting frame is somewhat rigid, so that some stability may be achieved, particularly during folding up or folding out. The mounting frame may for example serve as a fastening of at least one of the medium outlets on the spreader arm portion. However, it is also conceivable that a part of at least one of the medium outlets forms an interacting part. For example, if a part of the medium outlet is a rigid tube, this part may also be suitable for interaction with the activator. In any case, the part that is configured for interaction with the activator, whether it is a part of the medium outlet, or it is a frame, such as mounting frame, should be configured for being folded up or folded out by the activator. It may be desirable to allow the mounting frame to interact with the activator, as a mounting frame of this kind is generally already present. This mounting frame may for example be a simple bar, which is provided movably, preferably rotatably, on a spreader arm portion. It is also conceivable that the mounting frame comprises several medium outlets, for example two medium outlets, four medium outlets, or ten medium outlets. It is conceivable that between one and ten medium outlets may be provided on the mounting frame. Because the activator interacts with the mounting frame, the activator may be configured for simultaneously regulating all medium outlets that are provided on the mounting frame.

According to an advantageous embodiment variant, the spreader arm comprises at least one fixed spreader arm portion, and at least one spreader arm portion that is movable and/or adjustable, particularly displaceable, relative to the fixed spreader arm portion. Because one spreader arm portion is movable relative to the fixed spreader arm portion, only one part needs to be driven in order to adjust the working width. This contributes to simplification of the construction. Movable is preferably displaceable, i.e. the movable spreader arm portion can displace relative to the fixed spreader arm portion. Preferably this displacement is in a direction parallel to the longitudinal axis of the spreader arm. Because one of the spreader arm portions is fixed, optional fixed components may be fastened to this, which contributes to simpler construction. Thus, it may be conceivable for the activator to be provided on the fixed spreader arm portion. Preferably the activator is configured for regulating, preferably statically, the medium outlets of the displaceable spreader arm portion, as a function of the position and/or direction of motion of the movable spreader arm portion, preferably to fold up or to fold out and/or to close or to release. Thus, the activator may for example be configured to regulate at least one of the medium outlets at a predetermined interval that the displaceable spreader arm displaces relative to the fixed spreader arm portion. As a non-limiting example, the activator may be configured to fold out at least one medium outlet at about every 20 to 30 centimetres, preferably about 25 centimetres that the displaceable spreader arm portion displaces outwards relative to the fixed spreader arm portion. The aforementioned distances may be understood by a person skilled in the art with a margin of about 1 to 5 centimetres. The activator can thus regulate the medium outlets automatically, as a function of the mutual position of the spreader arm portions.

The activator is formed at least partially by a pusher frame, said pusher frame regulating the at least one medium outlet, preferably guiding in a folded up and/or closed state, preferably wherein the at least one medium outlet in a folded-up state abuts against the pusher frame. In this variant embodiment the folded-up state could also be regarded as a forced state. Especially because the medium outlet is forced to move in this state. It is preferred that the folding up (or forcing) and/or closing is a forcing motion, and the folding out and/or release is a motion as a result of a pretension in the folded-up position or force of gravity that acts upon the component. In this way, very simple action can be achieved wherein use may be made of the drive for the sliding out. For this purpose, the at least one drive for the displacement of spreader arm portions relative to each other is configured for moving the medium outlets along the at least one pusher frame. The drive for moving spreader arm portions relative to each other can be provided on one of the two spreader arm portions. Preferably the at least one medium outlet in the folded-up state is under at least a gravity component on the pusher frame. It is thus possible to ensure that when the spreader arm portion slides out, the folded-up medium outlet can fold out in a controlled manner under the effect of gravity, and accompanied by the pusher frame. It is conceivable that the activator comprises a second pusher frame, said pusher frame preferably being located above the aforementioned pusher frame, if provided. This can ensure that the folding out of the medium outlets does not take place under the effect of gravity, but as a result of the second pusher frame. This may possibly provide a more reliable configuration. Thus, if a folded-up medium outlet is rotated too far, it may be possible that gravity is exerted wrongly on the medium outlet so that it will not fold out under the effect of gravity. The placement of a second pusher frame may then force the folded-up medium outlets towards the folded-out state. The second pusher frame may for example be identical to the first (lower) pusher frame, wherein this is preferably placed reflected around a horizontal axis relative to said first pusher frame.

It is optionally conceivable that the pusher frame is an adjustable pusher frame. In particular it is then conceivable that the lowered portion of the pusher frame is adjustable, wherein in particular the angle of the lowered portion to the horizontal is adjustable. Thus, by means of one pusher frame, an adjustable speed of folding in and folding up can be achieved for the medium outlets and/or the mounting frames. Preferably at least one medium outlet is provided on a mounting frame, said mounting frame being provided movably on at least one of the spreader arm portions. Preferably the mounting frame is provided rotatably on the spreader arm portion, in particular the slidable spreader arm portion. It is conceivable that the rotation axis of the mounting frame is located parallel to the longitudinal axis of the spreader arm. The folding up and/or folding out will thus often take place during use in a plane that is located parallel to the direction of travel of the vehicle. Although the mounting frame preferably is at least rotatable aroud an axis that is substantially parallel to a longitudinal direction of the at least one spreader arm portion, it may also be conceivable that the mounting frame is folded up around an axis that is perpendicular to the longitudinal direction of the at least one spreader arm portion. It is preferred that all medium outlets, and in particular the mounting frames, are provided, individually and independently of each other, rotatably on at least one spreader arm portion. Preferably all individually and independently rotatably provided mounting frames are preferably provided on the slidable spreader arm portion. Especially because then use can be made of the drive that moves this spreader arm portion, offering a simpler construction that requires fewer moving or energy-consuming components. Preferably at least one mounting frame and/or at least one of the medium outlets is free from a drive. This offers the advantage that less energy is needed, and fewer drive components are required. According to an advantageous embodiment variant, during the regulating, particularly during the folding up or folding out and/or closing or releasing, the activator is in contact with the mounting frame and/or the medium outlet fitted in the mounting frame. Optionally it is possible that the activator is configured to achieve this without the medium outlet being fitted in a mounting frame. However, in such a case at least the part of the medium outlet that is in contact with the activator should be made of a somewhat rigid material, for example a hard plastic or metal. By keeping the activator, during the folding up or folding out, in contact with a mounting frame of this kind or the medium outlet itself, a controlled and guided motion from folded-out to folded-in, and/or released to closed (and vice versa) can be achieved. Especially in combination with the use of the drive for the spreader arm portions, a very simple solution can be provided for the simultaneous sliding-in or sliding-out of the spreader arm, as well as the regulating of the medium outlets. Without an extra drive being required. Preferably a guide path of the medium outlets from the folded-out and/or released position to the folded-in and/or closed position is guided by the at least one pusher frame. Preferably the guide path is between 10 cm and 150 cm, more preferably between 30 cm and 100 cm.

It is conceivable that the activator, preferably the pusher frame, comprises a lowered portion and a raised portion, wherein the lowered portion is preferably located at least partially below a rotation axis of the medium outlets, and wherein the raised portion is preferably located above the rotation axis of the medium outlets. The lowered portion abuts preferably, directly or indirectly, on the raised portion. It is for example conceivable that the lowered portion abuts against the raised portion with the intervention of a transition portion. Preferably the lowered portion and the raised portion together form a guide path. It is advantageous if the lowered portion is located farther outwards relative to the raised portion. Preferably the lowered portion extends at least partially beyond at least one spreader arm portion, in particular the fixed part. As a result, for example during the inward movement, a medium outlet will first start off against the lowered portion of the guide path, and then proceed onto the raised portion of the guide path. Preferably, an outermost part of the pusher frame, particularly an outermost part of the lowered portion, is at an angle to the longitudinal direction of the spreader arm. At this angle at least one part of the pusher frame preferably traverses the axis around which one of the medium outlets rotates. Optionally the mounting frames may be provided with a starting block, made of a material that is softer than the pusher frame. Such a starting block should be provided on a part of the mounting frame that is in contact with the pusher frame during the folding in or folding out. In this way, excessive wear of the pusher frame can be avoided.

It is also conceivable that the activator, preferably the pusher frame, comprises a first starting part and a second starting part. Preferably the angle that the first starting part and the second starting part make relative to a horizontal axis is mutually different, at least in a vertical plane. More preferably the second starting part makes a larger angle relative to a horizontal axis. The angle of the relevant starting part, in combination with a sliding speed of the spreader arm portions, determines the speed of folding in and folding out. It may be desirable to provide two starting parts with different angles so as to be able to achieve different speeds of folding up and folding out. If said starting parts are applied, this is preferably done on the part of the pusher frame that is lowered.

Preferably the activator is mounted at least partially at a distance, preferably in the direction of travel, from the at least one, preferably two spreader arm portions, preferably at a distance from the at least one fixed spreader arm portion. Preferably at least one part of the activator, in particular the pusher frame, more particularly the lowered portion of the pusher frame, crosses the rotation axis of at least one of the medium outlets. In this way it can be ensured that the medium outlets run towards the activator. Preferably the raised portion is located at least at a distance from the rotation axis of at least one medium outlet of the displaceable spreader arm portion. In this way, the activator, especially the pusher frame, provides sufficient space to be able to receive the medium outlets in the folded-up state.

According to a variant embodiment, at least one medium outlet is made at least partially of a resilient material, such as a rubber. A resilient material makes it possible to fold up and fold out the medium outlets frequently. Preferably the resilient material is selected so that in the folded-up state, at least at the location of the reversal, the medium outlet squeezes itself. In this way, by the folding up of the medium outlet, the medium outlet can also be closed by means of the squeezing of the medium outlet. This squeezing may be achieved because the medium outlet, in the folded-up state, makes a sharp kink, so that the possible passage of medium is blocked, or else minimized.

It is advantageous if the activator is configured to regulate, in particular to fold up or to fold out and/or to close or to release, the medium outlets individually and independently of each other. In this way, the most flexibility can be achieved. Preferably the folding in and folding out takes place as a function of the working width of the spreader arm. That is, if the displaceable spreader arm portion displaces outwards, the activator folds out the medium outlets so that a uniform distribution of medium outlets is achieved over at least a part, preferably the whole, of the length of the spreader arm.

Preferably the carrying frame comprises two spreader arms connected swivellably to opposite sides of the carrying frame, both of which comprise extendable spreader arm portions. Both spreader arm portions of both spreader arms may be configured according to one of the embodiments as discussed above. Optionally at least one of the medium outlets may be provided with a controllable closing device. By means of the controllable closing device, the medium outlet can be closed or released. Because the medium outlets should rotate from a direction turned towards the ground to a direction turned away from the ground, and vice versa, during the folding in and folding out it is advantageous to be able to close the medium outlets. This can prevent any residues of medium that are present in the medium outlet being propelled outwards by centrifugal forces.

The present invention also relates to a vehicle, particularly an agricultural vehicle, provided with an agricultural device according to the present invention. Furthermore, to a method for adjusting the working width of an agricultural device movable with a vehicle for spreading a pumpable medium, according to the present invention, comprising the steps a) moving at least one spreader arm from a transport position parallel to the direction of travel of the vehicle to a folded-out position extending substantially transversely to the direction of travel of the vehicle, sideways from the carrying frame, b) displacing the spreader arm portions relative to each other in the longitudinal direction of the spreader arm portions, c) folding up or folding out and/or closing or releasing around a rotation axis of at least one of the medium outlets during the displacement with the activator dependent on a mutual position and/or direction of motion of the at least two spreader arm parts.

Preferably wherein during step c) the activator simultaneously folds up or folds out and closes or releases the at least one medium outlet. These advantages with respect to the agricultural device according to the present invention are also included here by reference as advantages relating to the vehicle as well as the present method for adjusting the working width of an agricultural device movable with a vehicle.

The present invention will be discussed in more detail hereunder on the basis of the following figures, in which:
- Fig. 1 shows a general view of an agricultural device according to the invention;
- Fig. 2 shows a detail of a part of the agricultural device according to a first variant embodiment;
- Fig. 3 shows a perspective view of a part of the agricultural device; and
- Figs. 4A and 4B show two variants of an activator.

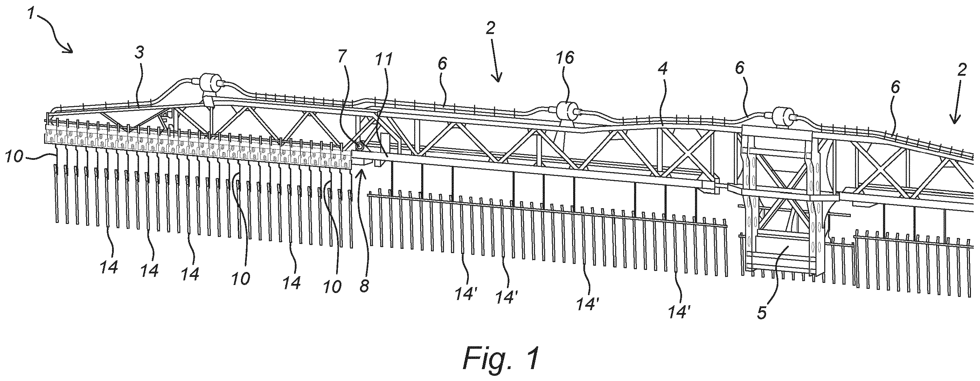

Fig. 1 shows a general view of an agricultural device 1 according to the present invention. In this variant embodiment, a carrying frame 5 is provided with two spreader arms 2. Each of these spreader arms 2 is coupled swivellably to the carrying frame 5. In particular, the spreader arms 2 are swivellable around a vertical axis relative to the carrying frame 5. The carrying frame is preferably provided with a coupling, for coupling the carrying frame 5 to a vehicle. This vehicle may for example be a tractor or a slurry tank. The spreader arms 2 can thus rotate from a transport position, wherein the spreader arms 5 preferably extend in the direction of travel, and a working position, wherein the spreader arms 2 preferably extend at least partially in a direction perpendicular to the direction of travel. Because at least one, preferably both spreader arms are provided with two spreader arm portions 3, 4 displaceable relative to each other, the track width of the agricultural device 1 can be adjusted. It is in addition advantageous, for example in the transport position, to have a construction that is as compact as possible, and for this purpose, in the transport position both spreader arm portions 3, 4 may overlap substantially completely. However, in the working position, as shown in this figure, it is advantageous if a working width as large as possible can be achieved with the agricultural device 1. For this purpose, the agricultural device 1, especially the spreader arm 2, is provided with displaceable spreader arm portions 3, 4. A first spreader arm portion 4 is in particular a fixed spreader arm portion 4. "Fixed" is to be understood as not translatable relative to the carrying frame 5. The fixed spreader arm portion 4 may, however, provide the aforementioned rotation relative to said carrying frame 5 by coupling the fixed spreader arm portion 4 by means of a rotation axis, preferably mounted on bearings, to the carrying frame 5. Owing to a drive 7, it is possible to displace the displaceable spreader arm portion 3 relative to the fixed spreader arm portion 4. According to this variant embodiment, the displaceable spreader arm portion 3 is in particular slidable relative to the fixed spreader arm portion 4. A supply line 6 is provided on the carrying frame 5, and provides a supply of medium. In the embodiment shown, the supply line 6 feeds from the carrying frame 5 via the spreader arm 2, to the medium outlets 14, 14'. For this purpose, for example a distributing device 16 may be provided on one or on both spreader arm portions 3, 4. Said distributing device 16 is configured for distributing medium that comes from a central supply of medium, such as via supply line 6, to the various medium outlets 14, 14'. For purposes of illustration, not every line 6 is shown in this and subsequent figures. A person skilled in the art understands, however, that in order to be able to spread medium over agricultural land via the medium outlets 14, 14', it is necessary to have a connection to the supply line 6. In this figure the agricultural device 1 is set to the maximum working width. However, it may be necessary to work agricultural land with a partly reduced working width. A smaller working width can be set by inward displacement of the displaceable spreader arm portion 3. Then the two spreader arm portions 3, 4 partly overlap each other. However, it is not desirable if there is a double medium outlet in the overlapping region of the spreader arm portions 3, 4. Therefore some medium outlets 14, 14' will have to be folded up, or closed, in order to prevent this. Generally agricultural devices 1 are provided for this purpose with a drive for the rotating of medium outlets 14, 14'. However, this requires extra energy to operate this drive, and in addition means more maintenance. The present invention offers a solution to this. In the non-limiting embodiment shown, by means of at least one activator 8, the medium outlets 14 of the movable spreader arm portion 3 can be folded up and/or closed individually and independently during the sliding-in of that spreader arm portion 3. Conversely, it is also possible by means of said activator 8 during the sliding-out of the spreader arm portion 3, to fold out and/or release the medium outlets 14 thereof individually and independently. The great advantage is that, apart from the drive 7 for moving the spreader arm portion 3, no additional drive is required. The folding up or folding out and/or the closing or releasing of the medium outlets 14 takes place for this purpose as a function of a direction of motion of the spreader arm and/or as a function of a mutual position of the spreader arm portions 3, 4.

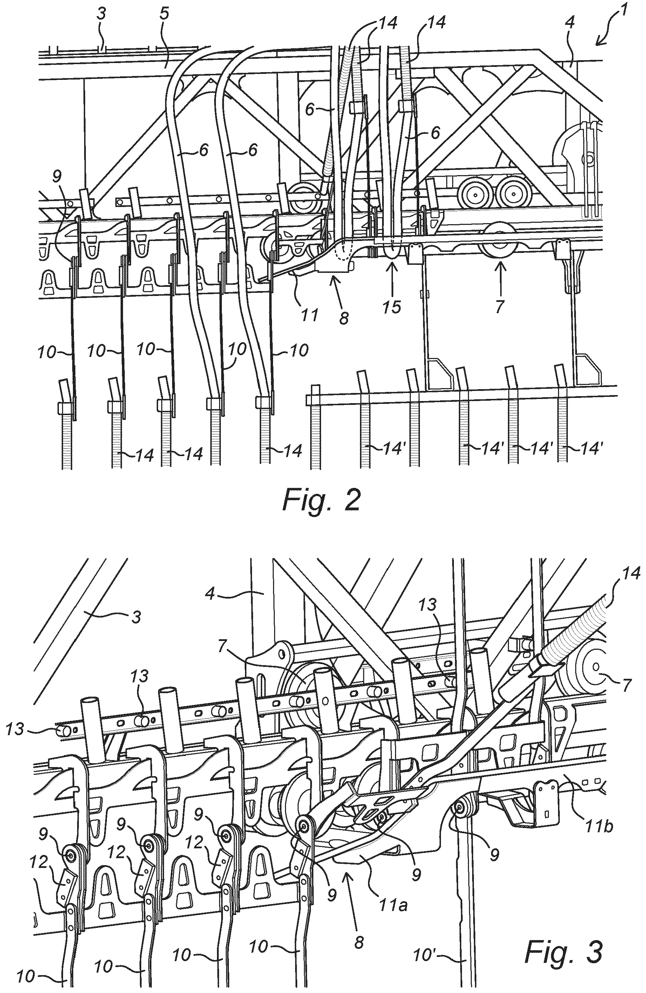

Fig. 2 shows a part of the agricultural device 1 in more detail. In particular, the part that includes the activator 8. In this figure, the two spreader arm portions 3, 4 of the spreader arm 2 are partly overlapping. As can be seen clearly in this detail, all medium outlets 14' of the fixed spreader arm portion 4 are directed towards the ground. The medium outlets 14 of the displaceable spreader arm portion 3 are partly directed towards the ground, and partly turned away from the ground. In the instant that is illustrated, two medium outlets 14 are turned away from the ground completely, rotated about 180 degrees relative to the medium outlets turned towards the ground. A third medium outlet 14 is still in rotation towards a substantially completely upward position. The advantage of this upwards-directed orientation of the medium outlets 14 is that residues of medium cannot flow out in this orientation. The point of reversal 15 may possibly form a kink, so that the medium line 6 can be closed substantially completely. In the embodiment shown, the medium outlets 14 are mounted on a mounting frame 10, said mounting frames 10 mounting the medium outlets 14 on the slidable frame 3. The mounting frame 10 is then preferably rotatable around a rotation axis 9 in such a way that the medium outlets 14 can be folded-in and folded-up around this rotation axis 9. In order to be able to distribute medium on ground to be worked, at least one of the medium outlets 14 is connected to a supply line 6 for liquid medium. It is preferred that this supply line 6 is made of a resilient material such as rubber. More preferably, this supply line 6 is dimensioned so that in the folded-up state of the medium outlets 14, the supply line 6 bends, thereby shutting off, or at least impeding, the supply. The supply line 6 must at least be configured to be able to receive the motion of the medium outlets 14 from the downward-directed position to the upward-directed position. In order to be able to displace the displaceable spreader arm portion 3, a drive 7 is incorporated in the spreader arm. This drive may be fastened on the fixed spreader arm portion 4. In this non-limiting embodiment, the drive is formed by two sets of wheels, of which at least one wheel is drivable. The displaceable spreader arm portion 3 is preferably in contact with the drivable wheel so as to push the spreader arm portion 3 inwards or outwards.

Fig. 3 shows a detail of the activator 8 according to the present invention. In this variant embodiment the activator 8 is mounted on the fixed spreader arm portion 4. The activator 8 is configured to guide the medium outlets 14 from the downward-directed position to the upward-directed position, and vice versa. The activator 8 comprises a lowered portion 11a and a raised portion 11b. The lowered portion 11a is at least partially below the rotation axis 9 of the mounting frame 10. The raised portion is at least partially, preferably completely above said rotation axis 9. The lowered portion 11a and the raised portion 11b together form the pusher frame 11. Preferably the lowered portion 11a undergoes transition into the raised portion 11b, wherein this is preferably continuous. The lowered portion 11a can guide a medium outlet 14, or the mounting frame thereof 10, from the downwards state to the upwards state. This preferably takes place with continuous contact between the frame 10 or the outlet 14 and the pusher frame 11. Because the pusher frame 11 extends over a path of motion from below the rotation axis 9 to above the rotation axis, a rotation can be forced by the pusher frame 11. In order to prevent excessive wear of the medium outlets 14, the mounting frame 10 or the pusher frame 11, the mounting frame 10 may be provided with a starting block 12. This starting block 12 may for example be made of a wear-resistant plastic. Preferably this component 12 is provided on a part of the medium outlet 14 or the mounting frame 10 that is in contact with the pusher frame 11 during the folding in and out. Preferably at least one spreader arm portion 3, 4, in particular the displaceable spreader arm portion 3, is provided with a bump stop 13. This bump stop 13 may be formed by a rubber or buffer block. The bump stop 13 can prevent the mounting frame 10 rotating too far. This is particularly advantageous since there is no drive that can stop the motion of the mounting frame 10. Therefore it is advantageous if by means of said bump stop 13, the extreme position can be established, to prevent the mounting frame 10 rotating too far.

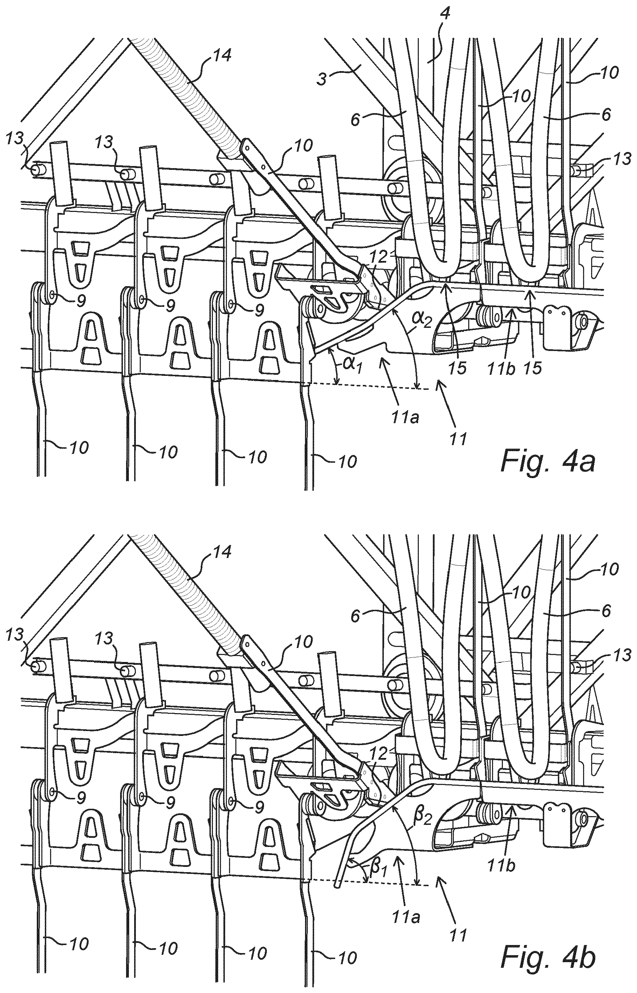

Figs. 4A and 4B show two variant embodiments of the pusher frame 11. In particular, the lowered portions 11a deviate. As stated above, it is to be preferred that the lowered portion 11a has a continuous transition to the raised portion 11b. In this way, the mounting frame 10 or the medium outlet 14 can be folded-in or folded-out continuously and gradually. However, it may be desirable if the speed with which the folding-in and folding-out take place can be adjusted. It is conceivable to achieve this in at least two different ways. The first way is to adjust the drive 7. For example, by setting the drive 7 at a higher speed, the displaceable spreader arm portion 3 will move along the pusher frame 11 at a higher speed. A consequence of this is that the mounting frame 10 or the medium outlet 14 travels faster over the path of motion along the lowered portion 11a and the raised portion 11b. Now, the mounting frame 10 or the medium outlet 14 is rotated a predetermined amount per displacement unit. By increasing the displacement speed, the rotary speed is increased linearly. A second way is adjusting the pusher frame 11. In particular, the lowered portion 11b of the pusher frame can be adapted in order to adjust the rotary speed. Thus, for example in Fig. 4A, the lowered portion 11a makes a first angle *α*₁ with a horizontal line. A second portion of the lowered portion 11a makes an angle *α*₂ with the same horizontal line. In this case the angle *α*₂ is greater than the angle *α*₁, but the invention is not limited to this. The speed of the folding in and out of the medium outlets 14 or the mounting frame 10, at least at constant displacement speed, is determined by the angle that the pusher frame 11 makes relative to said horizontal line. The larger the angle, the higher the speed of the folding in and out of the medium outlets 14 or the mounting frame 10. In Fig. 4A, a progressive folding-in speed and a degressive folding-out speed are selected. That is, as the medium outlets 14 or the mounting frame 10 move further inwards, the folding-in will be quicker. For sliding outwards, exactly the opposite occurs, so that as the medium outlets 14 or the mounting frame 10 move further outwards, the folding-out will be slower. The pusher frame 11 shown in Fig. 4B represents another embodiment. In this case the outermost part of the lowered portion 11a makes a first angle *β*₁ with the horizontal line, and an innermost part of the lowered portion makes an angle *β*₂ with said horizontal line. In this case the first angle *β*₁ is greater than the second angle *β*₂. As a result, the speed of folding-in of the medium outlets 14 or mounting frames 10 will be regressive, and the speed of folding-out of the medium outlets 14 or mounting frames 10 will be progressive. It is optionally conceivable that the pusher frame 11 is an adjustable pusher frame 11. In particular, it is then conceivable that the lowered portion 11a of the pusher frame 11 is adjustable, wherein in particular the angle of the lowered portion 11a relative to the horizontal line is adjustable. Thus, by means of one pusher frame, an adjustable speed of folding in and folding up can be achieved for the medium outlets 14 and/or the mounting frames 10.

## Claims

1. Agricultural device (1) for spreading a pumpable medium over agricultural land, comprising:
- a carrying frame (5) that is configured to be connected to a vehicle;
- at least one first spreader arm (2) connected, preferably swivellably, to the carrying frame (5), said first spreader arm (2) being movable between a folded-out position extending sideways from the carrying frame (5) substantially transversely to the direction of travel of the vehicle, and a transport position extending substantially in the direction of travel of the vehicle, wherein
- the first spreader arm (2) comprises at least two portions (3,4) displaceable relative to each other in the longitudinal direction, wherein at least one of the spreader arm portions (3,4) is provided with medium outlets (14),
- a pumpable medium line which extends from the carrying frame (5) along the spreader arm (2) to the pumpable medium outlets (14);
- at least one drive (7) for moving the at least two spreader arm (2) portions relative to each other,
wherein the agricultural device (1) comprises at least one activator (8), **characterised in that** the at least one activator (8) is at least partially formed by a pusher frame, configured for regulating at least one of the medium outlets (14) dependent on the mutual position and/or direction of motion of the at least two spreader arm portions (3,4), wherein the regulation of the at least one medium outlet comprises at least folding up or folding out around a rotation axis (9) and/or closing or releasing of the at least one medium outlet (14).

2. Agricultural device (1) according to Claim 1, wherein the activator (8) is configured for simultaneously folding up or folding out and closing or releasing at least one of the medium outlets (14).

3. Agricultural device (1) according to one of the preceding claims, wherein the activator (8) is configured for regulating a single medium outlet (14) dependent on the mutual position and/or direction of motion of the at least two spreader arm portions (3,4) and/or of a pair of medium outlets (14).

4. Agricultural device (1) according to Claim 3, wherein the activator (8) is configured for successively regulating adjacent medium outlets (14) dependent on the mutual position and/or direction of motion of the at least two spreader arm portions (3,4).

5. Agricultural device (1) according to one of the preceding claims, wherein the activator (8) is configured for interacting with a mounting frame (10) of at least one of the medium outlets (14).

6. Agricultural device (1) according to one of the preceding claims, wherein the first spreader arm (2) comprises at least one fixed spreader arm portion (4), and at least one spreader arm portion (3) displaceable relative to the fixed spreader arm portion (4), preferably wherein the activator (8) is configured to regulate, preferably statically, preferably to fold up or to fold out and/or to close or to release the medium outlets (14) of the displaceable spreader arm portion (3), as a function of the position and/or direction of motion of the displaceable spreader arm portion (3).

7. Agricultural device (1) according to one of the preceding claims, wherein the pusher frame guides the at least one medium outlet (14) in a folded up and/or closed state, preferably wherein the at least one medium outlet (14) in a folded-up state abuts against the pusher frame.

8. Agricultural device (1) according to one of the preceding claims, wherein the activator (8), preferably the pusher frame, comprises a lowered portion (11a) and a raised portion (11b), wherein the lowered portion (11a) preferably is located below a rotation axis (9) of the medium outlets (14), and wherein the raised portion (11b) preferably is located above the rotation axis (9) of the medium outlets (14).

9. Agricultural device (1) according to one of the preceding claims, wherein at least one medium outlet (14) is made at least partially of a resilient material, such as a rubber.

10. Agricultural device (1) according to one of the preceding claims, wherein at least one medium outlet is provided on a mounting frame (10), said mounting frame (10) being provided movably on at least one of the spreader arm portions, preferably wherein the mounting frame (10) is at least rotatable around an axis that is substantially parallel to a longitudinal direction of the at least one spreader arm portion.

11. Agricultural device (1) according to Claim 10, wherein the activator (8), during regulation, in particular folding up or folding out and/or closing or releasing, is in contact with the mounting frame (10) and/or the medium outlet (14) fitted in the mounting frame (10).

12. Agricultural device (1) according to one of the preceding claims, wherein the activator (8) is configured to regulate, in particular to fold up or to fold out and/or to close or to release, the medium outlets (14) individually and independently of each other.

13. Vehicle, in particular an agricultural vehicle, provided with an agricultural device (1) according to one of Claims 1-12.

14. Method for adjusting the working width of an agricultural device (1) movable with a vehicle for spreading a pumpable medium, wherein the agricultural device is according to one of Claims 1-12, comprising the steps:
a) moving the at least one first spreader arm (2) from a transport position parallel to the direction of travel of the vehicle to a folded-out position extending substantially transversely to the direction of travel of the vehicle, sideways from the carrying frame; and
b) displacing the spreader arm portions relative to each other in the longitudinal direction of the first spreader arm portions,
c) folding up or folding out and/or closing or releasing around a rotation axis (9) of at least one of the medium outlets (14) during the displacement with the activator (8) dependent on a mutual position and/or direction of motion of the at least two spreader arm portions, preferably wherein during step c) the activator (8) simultaneously folds up or folds out and closes or releases the at least one medium outlet (14).

## Patentansprüche

1. Landwirtschaftliche Vorrichtung (1) zum Ausbringen eines pumpfähigen Mediums auf landwirtschaftliche Flächen, umfassend:
- einen Tragrahmen (5), der dazu konfiguriert ist, an einem Fahrzeug befestigt zu werden;
- mindestens einen ersten Verteilerarm (2), der bevorzugt schwenkbar mit dem Tragrahmen (5) verbunden ist, wobei der erste Verteilerarm (2) zwischen einer ausgeklappten Position, in der er sich seitlich von dem Tragrahmen (5) im Wesentlichen quer zu der Fahrtrichtung des Fahrzeugs erstreckt, und einer Transportposition, in der er sich im Wesentlichen in Fahrtrichtung des Fahrzeugs erstreckt, bewegbar ist, wobei
- der erste Verteilerarm (2) mindestens zwei in Längsrichtung relativ zueinander verschiebbare Abschnitte (3, 4) umfasst, wobei mindestens einer der Verteilerarmabschnitte (3, 4) mit Mediumauslässen (14) bereitgestellt ist,
- eine Leitung für ein pumpfähiges Medium, die sich von dem Tragrahmen (5) entlang des Verteilerarm (2) zu den Auslässen für ein pumpfähiges Medium (14) erstreckt;
- mindestens einen Antrieb (7) zum Bewegen der mindestens zwei Abschnitte des Verteilerarms (2) relativ zueinander,
wobei die landwirtschaftliche Vorrichtung (1) mindestens ein Betätigungselement (8) umfasst, **dadurch gekennzeichnet, dass** das
mindestens eine Betätigungselement (8) zumindest teilweise durch einen Schubrahmen gebildet ist, der dazu konfiguriert ist, mindestens einen der Mediumauslässe (14) in Abhängigkeit von der Position zueinander und/oder Bewegungsrichtung der mindestens zwei Abschnitte (3, 4) des Verteilerarms zu regulieren, wobei die Regulierung des mindestens einen Medienauslasses mindestens ein Hochklappen oder Ausklappen um eine Drehachse (9) und/oder ein Schließen oder Freigeben des mindestens einen Mediumauslasses (14) umfasst.

2. Landwirtschaftliche Vorrichtung (1) nach Anspruch 1, wobei das Betätigungselement (8) dazu konfiguriert ist, mindestens einen der Mediumauslässe (14) gleichzeitig hoch- oder auszuklappen und zu schließen oder freizugeben.

3. Landwirtschaftliche Vorrichtung (1) nach einem der vorstehenden Ansprüche, wobei das Betätigungselement (8) dazu konfiguriert ist, einen einzelnen Mediumauslass (14) in Abhängigkeit von der Position zueinander und/oder Bewegungsrichtung der mindestens zwei Abschnitte (3, 4) des Verteilerarms und/oder eines Paares von Mediumauslässen (14) zu regulieren.

4. Landwirtschaftliche Vorrichtung (1) nach Anspruch 3, wobei das Betätigungselement (8) dazu konfiguriert ist, benachbarte Mediumauslässe (14) in Abhängigkeit von der Position zueinander und/oder Bewegungsrichtung der mindestens zwei Abschnitte (3, 4) des Verteilerarms nacheinander zu regulieren.

5. Landwirtschaftliche Vorrichtung (1) nach einem der vorstehenden Ansprüche, wobei das Betätigungselement (8) dazu konfiguriert ist, mit einem Montagerahmen (10) mindestens eines der Mediumauslässe (14) zusammenzuwirken.

6. Landwirtschaftliche Vorrichtung (1) nach einem der vorstehenden Ansprüche, wobei der erste Verteilerarm (2) mindestens einen feststehenden Verteilerarmabschnitt (4) und mindestens einen relativ zu dem feststehenden Verteilerarmabschnitt (4) verschiebbaren Verteilerarmabschnitt (3) umfasst, bevorzugt, wobei das Betätigungselement (8) dazu konfiguriert ist, bevorzugt statisch, bevorzugt zum Hochklappen oder Ausklappen und/oder zum Schließen oder Freigeben der Mediumauslässe (14) des verschiebbaren Verteilerarmabschnitts (3) in Abhängigkeit von der Position und/oder Bewegungsrichtung des verschiebbaren Verteilerarmabschnitts (3) zu regulieren.

7. Landwirtschaftliche Vorrichtung (1) nach einem der vorstehenden Ansprüche, wobei der Schubrahmen den mindestens einen Mediumauslass (14) in einem hochgeklappten und/oder geschlossenen Zustand führt, bevorzugt wobei der mindestens eine Mediumauslass (14) in einem hochgeklappten Zustand an dem Schubrahmen anliegt.

8. Landwirtschaftliche Vorrichtung (1) nach einem der vorstehenden Ansprüche, wobei das Betätigungselement (8), bevorzugt der Schubrahmen, einen abgesenkten Abschnitt (11a) und einen angehobenen Abschnitt (11b) umfasst, wobei der abgesenkte Abschnitt (11a) bevorzugt unterhalb einer Drehachse (9) der Mediumauslässe (14) angeordnet ist, und wobei der angehobene Abschnitt (11b) bevorzugt oberhalb der Drehachse (9) der Mediumauslässe (14) angeordnet ist.

9. Landwirtschaftliche Vorrichtung (1) nach einem der vorstehenden Ansprüche, wobei mindestens ein Mediumauslass (14) zumindest teilweise aus einem elastischen Material, wie etwa Gummi, hergestellt ist.

10. Landwirtschaftliche Vorrichtung (1) nach einem der vorstehenden Ansprüche, wobei mindestens ein Mediumauslass an einem Montagerahmen (10) bereitgestellt ist, wobei der Montagerahmen (10) bewegbar an mindestens einem der Verteilerarmabschnitte bereitgestellt ist, bevorzugt wobei der Montagerahmen (10) zumindest um eine Achse drehbar ist, die im Wesentlichen parallel zu einer Längsrichtung des mindestens einen Verteilerarmabschnitts verläuft.

11. Landwirtschaftliche Vorrichtung (1) nach Anspruch 10, wobei das Betätigungselement (8) während der Regulierung, insbesondere beim Hochklappen oder Ausklappen und/oder Schließen oder Freigeben, mit dem Montagerahmen (10) und/oder dem Mediumauslass (14), der in den Montagerahmen (10) eingebaut ist, in Kontakt steht.

12. Landwirtschaftliche Vorrichtung (1) nach einem der vorstehenden Ansprüche, wobei das Betätigungselement (8) dazu konfiguriert ist, die Mediumauslässe (14) einzeln und unabhängig voneinander zu regulieren, insbesondere hochzuklappen oder auszuklappen und/oder zu schließen oder freizugeben.

13. Fahrzeug, insbesondere ein landwirtschaftliches Fahrzeug, das mit einer landwirtschaftlichen Vorrichtung (1) nach einem der Ansprüche 1-12 bereitgestellt ist.

14. Verfahren zum Einstellen der Arbeitsbreite einer mit einem Fahrzeug bewegbaren landwirtschaftlichen Vorrichtung (1) zum Ausbringen eines pumpfähigen Mediums, wobei die landwirtschaftliche Vorrichtung nach einem der Ansprüche 1 bis 12 ausgebildet ist, umfassend die folgenden Schritte:
a) Bewegen des mindestens einen ersten Verteilerarms (2) aus einer Transportposition parallel zu der
Fahrtrichtung des Fahrzeugs in eine ausgeklappte Position, die sich im Wesentlichen quer zu der Fahrtrichtung des Fahrzeugs erstreckt, seitlich von dem Tragrahmen; und
b) Verschieben der Verteilerarmabschnitte relativ zueinander in Längsrichtung der ersten Verteilerarmabschnitte,
c) Hochklappen oder Ausklappen und/oder Schließen oder Freigeben um eine Drehachse (9) mindestens eines der Mediumauslässe (14) während der Verschiebung mit dem Betätigungselement (8) in Abhängigkeit von einer Position zueinander und/oder Bewegungsrichtung der mindestens zwei Verteilerarmabschnitte, bevorzugt wobei während Schritt c) das Betätigungselement (8) gleichzeitig den mindestens einen Mediumauslass hochklappt oder ausklappt und schließt oder freigibt (14).

## Revendications

1. Dispositif agricole (1) destiné à épandre un fluide pompable sur des terres agricoles, comprenant :
- un châssis de support (5) conçu pour être fixé à un véhicule ;
- au moins un premier bras d'épandage (2) relié, de préférence de manière pivotante, au châssis de support (5), ledit premier bras d'épandage (2) pouvant être déplacé entre une position déployée s'étendant latéralement à partir du châssis de support (5) sensiblement transversalement à la direction de déplacement du véhicule, et une position de transport s'étendant sensiblement dans la direction de déplacement du véhicule, dans lequel
- le premier bras d'épandage (2) comprend au moins deux parties (3, 4) mobiles l'une par rapport à l'autre dans la direction longitudinale, au moins l'une des parties de bras d'épandage (3, 4) étant pourvue de sorties de fluide (14),
- une conduite de fluide pompable qui s'étend depuis le châssis de support (5) le long du bras d'épandage (2) jusqu'aux sorties de fluide pompable (14) ;
- au moins un dispositif d'entraînement (7) destiné à déplacer les au moins deux parties de bras d'épandage (2) l'une par rapport à l'autre,
dans lequel le dispositif agricole (1) comprend au moins un activateur (8), **caractérisé en ce que**
l'au moins un activateur (8) est constitué, au moins en partie, d'un châssis pousseur, conçu pour réguler au moins l'une des sorties de fluide (14) en fonction de la position relative et/ou de la direction de déplacement des au moins deux parties de bras d'épandage (3, 4), dans lequel
le réglage de l'au moins une sortie de fluide comprend au moins le repliement ou le dépliement autour d'un axe de rotation (9) et/ou la fermeture ou la libération de l'au moins une sortie de fluide (14).

2. Dispositif agricole (1) selon la revendication 1, dans lequel l'actionneur (8) est conçu pour replier ou déplier et fermer ou libérer simultanément au moins l'une des sorties de fluide (14).

3. Dispositif agricole (1) selon l'une des revendications précédentes, dans lequel l'activateur (8) est conçu pour réguler une seule sortie de fluide (14) en fonction de la position relative et/ou de la direction de déplacement des au moins deux parties de bras d'épandage (3, 4) et/ou d'une paire de sorties de fluide (14).

4. Dispositif agricole (1) selon la revendication 3, dans lequel l'activateur (8) est conçu pour réguler successivement des sorties de fluide (14) adjacentes en fonction de la position relative et/ou de la direction de déplacement des au moins deux parties de bras d'épandage (3, 4).

5. Appareil agricole (1) selon l'une des revendications précédentes, dans lequel l'activateur (8) est conçu pour interagir avec un châssis de montage (10) d'au moins l'une des sorties de fluide (14).

6. Dispositif agricole (1) selon l'une des revendications précédentes, dans lequel le premier bras d'épandage (2) comprend au moins une partie de bras d'épandage fixe (4) et au moins une partie de bras d'épandage (3) mobile par rapport à la partie de bras d'épandage fixe (4), de préférence dans lequel l'activateur (8) est conçu pour réguler, de préférence de manière statique, de préférence pour replier ou déplier et/ou pour fermer ou libérer les sorties de fluide (14) de la partie de bras d'épandage mobile (3), en fonction de la position et/ou de la direction de déplacement de la partie de bras d'épandage mobile (3).

7. Appareil agricole (1) selon l'une des revendications précédentes, dans lequel le châssis pousseur guide l'au moins une sortie de fluide (14) lorsqu'elle est repliée et/ou fermée, de préférence dans lequel l'au moins une sortie de fluide (14), lorsqu'elle est repliée, vient en butée contre le châssis pousseur.

8. Dispositif agricole (1) selon l'une des revendications précédentes, dans lequel l'activateur (8), de préférence le châssis pousseur, comprend une partie abaissée (11a) et une partie surélevée (11b), la partie abaissée (11a) étant de préférence située en dessous d'un axe de rotation (9) des sorties de fluide (14), et dans lequel la partie surélevée (11b) est de préférence située au-dessus de l'axe de rotation (9) des sorties de fluide (14).

9. Dispositif agricole (1) selon l'une des revendications précédentes, dans lequel au moins une sortie de fluide (14) est réalisée au moins en partie dans un matériau élastique, tel que du caoutchouc.

10. Dispositif agricole (1) selon l'une des revendications précédentes, dans lequel au moins une sortie de fluide est prévue sur un châssis de montage (10), ledit châssis de montage (10) étant monté de manière mobile sur au moins l'une des parties de bras d'épandage, de préférence dans lequel le châssis de montage (10) est au moins rotatif autour d'un axe sensiblement parallèle à la direction longitudinale de ladite au moins une partie de bras d'épandage.

11. Dispositif agricole (1) selon la revendication 10, dans lequel l'actionneur (8), lors d'une manœuvre de régulation, notamment de repliage ou de dépliage et/ou de fermeture ou de libération, est en contact avec le châssis de montage (10) et/ou la sortie de fluide (14) montée dans le châssis de montage (10).

12. Dispositif agricole (1) selon l'une des revendications précédentes, dans lequel l'activateur (8) est conçu pour réguler, notamment pour replier ou déplier et/ou pour fermer ou libérer, les sorties de fluide (14) individuellement et indépendamment les unes des autres.

13. Véhicule, notamment un véhicule agricole équipé d'un dispositif agricole (1) selon l'une des revendications 1 à 12.

14. Procédé de réglage de la largeur de travail d'un dispositif agricole (1) pouvant être déplacé à l'aide d'un véhicule pour épandre un fluide pompable, dans lequel le dispositif agricole est conforme à l'une des revendications 1 à 12, comprenant les étapes suivantes :
a) déplacer l'au moins un premier bras d'épandage (2) d'une position de transport parallèle
au sens de marche du véhicule, jusqu'à une position déployée s'étendant sensiblement transversalement au sens de marche du véhicule, sur le côté du châssis de support ; et
b) déplacer les parties de bras d'épandage les unes par rapport aux autres dans la direction longitudinale des premières parties de bras d'épandage,
c) replier ou déplier et/ou fermer ou libérer autour d'un axe de rotation (9) d'au moins une des sorties de fluide (14) pendant le déplacement, l'activateur (8) dépendant d'une position relative et/ou d'une direction de déplacement des au moins deux parties de bras d'épandage, de préférence de telle sorte que, pendant l'étape c), l'activateur (8) replie ou déplie et ferme ou libère simultanément ladite au moins une sortie de fluide (14).
